Europäisches Patentamt

European Patent Office

Office européen des brevets

(11) Publication number: **0 268 450**
**A2**

## EUROPEAN PATENT APPLICATION

(21) Application number: **87310112.5**

(22) Date of filing: **16.11.87**

(51) Int. Cl.4: **G 07 F 7/08**
**G 06 K 19/08**

(30) Priority: **17.11.86 US 931119**

(43) Date of publication of application:
**25.05.88 Bulletin 88/21**

(84) Designated Contracting States:
**BE CH DE ES FR GB IT LI NL SE**

(71) Applicant: **LIGHT SIGNATURES, INC.**
**1901 Avenue of the Stars**
**Los Angeles, CA 90067 (US)**

(72) Inventor: **Gold, David Gene**
**437 11th Street**
**Santa Monica California 90402 (US)**

**Gharibian, Vahakn Kevork**
**4611 LaMirada Avenue No. 21**
**Los Angeles California 90029 (US)**

(74) Representative: **Coles, Graham Frederick Sommerville &**
**Rushton et al**
**11 Holywell Hill**
**St Albans Hertfordshire AL1 1EZ (GB)**

(54) Authentication methods and systems.

(57) The authenticity of a document (D) is tested by sensing (14) its translucency throughout an area (12) and correlating the sequence of representations (20 Figure 2) produced, with a sequence of reference representations (18 Figure 2) read (16) from a magnetic recording (10) of an earlier-made sensing. Correlation is carried out by relating successive overlapping parts (L Figure 2) of the freshly-derived and digitized sequence with corresponding overlapping parts (L) respectively, of the digitized reference sequence. The overlapping parts (L) are of the same length (N), and overlap with one another equally, throughout both sequences (20,18), the extent (M) of overlap being such that all individual representations in each sequence (20;18) occur in three successive parts of that respective sequence. Assembler circuits (44,46; Figure 4) supply signals (SUM R, SUM R$^2$, SUM RS) in accordance with functions of the successive parts (S;R) of the two sequences, to an arithmetic unit (50) for generation of correlation scores (C) that are then analyzed (56) to produce an indication (42) of the degree of authenticity. A preliminary, independent check on the maxima, minima, and/or average value of the freshly-derived sequence is carried out by a test unit (38) to signal rejection of the document (D) if the check is not satisfied.

FIG.1

EP 0 268 450 A2

**Description**

Authentication Methods and Systems

This invention relates to methods of, and systems for, authentication of documents or other items, of the kind in which a sequence of representations freshly derived from sensing the relevant item is compared with a sequence of reference representations registered in respect of that item.

Methods and systems of the above-specified kind are known, for example from U. S. Patent 4,423,415, for authentication of items such as, for example, financial documents, product labels, identification cards, value cards and credit cards. The above-identified patent discloses a method and system in which the translucency of a document is sensed at successive locations of a scanned area of the document, and a sequence of data signals representative of measurements of the translucency at those locations is recorded magnetically on the document itself, in order to provide a reference registration of those measurements. Authentication of the document involves fresh sensing of the translucency at the successive locations, and comparison for correlation between the freshly-derived sequence of measurement representations and the recorded, reference sequence. However, if the document becomes marked, torn or otherwise affected in legitimate use or processing in the interval between the making of the reference recording and the fresh sensing, it may be difficult to achieve the correlation required for appropriate authentication of the document.

It is an object of the present invention to provide a method of, and system for, authentication of a document or other item, of the said above-specified kind, in which correlation of the compared freshly-derived and reference representations is facilitated even where the item concerned has undergone change during legitimate use or other handling since the making of the reference representations.

According to one aspect of the present invention a method of authentication of a document or other item, of the said above-specified kind is characterised in that successive, overlapping parts of the sequence of freshly-derived representations are correlated respectively with successive, overlapping parts of the sequence of reference representations, that values for the extents of correlation between the said parts correlated, are derived, and that authentication of said item is provided in dependence upon the derived correlation values.

According to another aspect of the present invention a system for authentication of a document or other item, of the said above-specified kind and in which an output related to authenticity of said item is provided in dependence upon the result of the comparison between the freshly-derived sequence and the reference sequence, is characterised in that it includes means for correlating successive, overlapping parts of the sequence of freshly-derived representations respectively with successive, overlapping parts of the sequence of reference representations to derive values for the extents of correlation between them, and that the said output is provided in dependence upon the correlation values.

The method and system of the present invention facilitate correlation between the freshly-derived and reference representations where the document or other item concerned has undergone change during legitimate use or other handling. By "dissecting" the sequences into successive overlapping parts and determining the correlation, and thus authenticity, in dependence upon the correlations existing between respective, corresponding parts of the two sequences, it is readily possible to accommodate differences arising from acceptable changes of this nature.

The parts of the sequences of freshly-derived and reference representations used in the correlation operation may be all substantially of the same length as one another. The extent of overlap between them may be the same throughout both sequences, and may also be such that each individual representation occurs in three successive parts of its respective sequence to assist in identifying changes that have taken place.

The present invention may, in a general but non-limiting sense, be seen as involving the use of correlation techniques applied to a data package that is dissected into shifted sets of sample data groups that are offset and overlapped. In a digital format, groups of a predetermined number of samples (for example, derived from an analog) are offset by a predetermined number of such samples. The groups are then correlated individually. The predetermined numbers used in individual applications are best determined on the basis of analysis taking into consideration the nature of the source document or other item involved, the likely damage to such item, and the nature of its use.

The method and system of the present invention may involve the sensing a document to derive an analog signal representative of a characteristic (such as translucency or opacity) throughout a narrow area of the document. The signal as then sampled to translate it into digital format, is then dissected and organized to form successive offset and overlapping test groups or parts of the signal. A reference signal derived from an earlier sensing of the document and registered in a recording, for example, on the document itself, is dissected and organized in the same way. It is with the groups or parts of this reference signal that the groups or parts of the freshly-derived signal are respectively correlated to derive values or scores representative of the individual extents of correlation achieved. The scores are then analyzed logically in accordance with the appropriate criteria to indicate the authenticity of the document.

Brief Description of the Drawings

In the drawings, which constitute a part of this specification, an exemplary embodiment of the invention is set forth as follows:

FIGURE 1 is a schematic and block diagram of a system in accordance with the present invention;
FIGURE 2 is a graphic analysis illustrative of the operation of the system of FIGURE 1;
FIGURE 3 is an enlarged fragment of a curve of FIGURE 2 diagrammed for detailed analysis; and
FIGURE 4 is a block diagram of a component of the system of FIGURE 1.

Description of the Illustrative Embodiment

As indicated above, a detailed illustrative embodiment of the present invention is disclosed herein. However, physical identification media, data formats, correlation formulas and operating systems structured in accordance with the present invention may be embodied in a wide variety of forms, some of which may be quite different from those of the disclosed embodiment. Consequently, the specific structural and functional details disclosed herein are merely representative, yet in that regard they are deemed to afford the best embodiment for purposes of disclosure and to provide a basis for the claims herein which define the scope of the present invention.

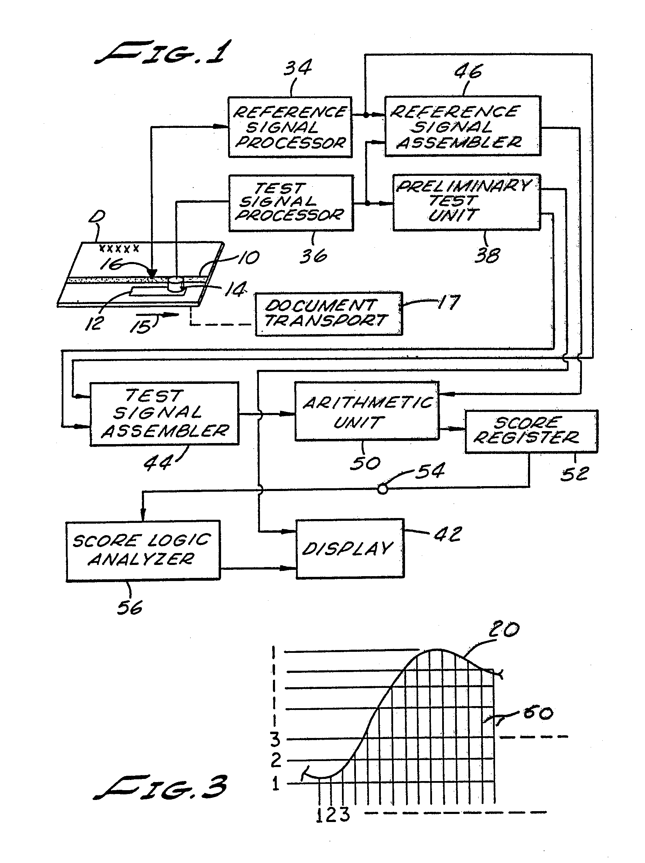

Referring initially to FIGURE 1, a document D (upper left) is illustrated along with a system for authenticating the document as genuine. As illustrated, the document D carries a magnetic stripe 10 and has a machine-readable uniqueness characteristic located in an area 12. Generally, the magnetic stripe 10 records data representative of the machine-readable characteristic of the specified area 12. Accordingly, the document is verified or authenticated by reading the magnetic stripe 10 for reference data, sensing the document characteristic from the area 12 for test data and comparing or correlating the two sets of data for coincidence. Of course, the degree of coincidence is a manifestation of the document's authenticity.

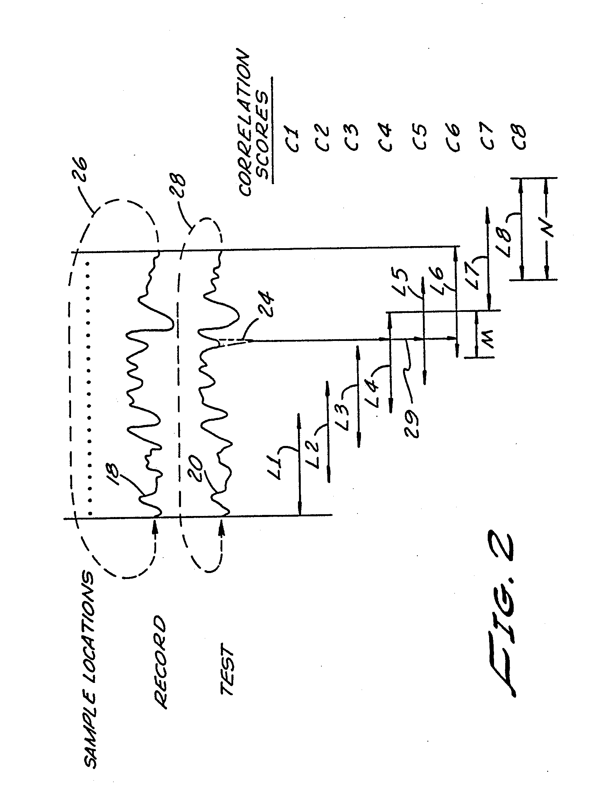

The document D may take a variety of different forms, some of which are disclosed in U. S. Patent 4,423,415 entitled "Non-Counterfeitable Document System" and granted December 27, 1983. The document D is paper with varying translucency or opacity in small, discrete areas. Accordingly, scanning a light sensor 14 along the area 12 with the document D illuminated from the rear produces an analog signal representative of the light translucency pattern along the area 12. To accomplish the scanning, the document D may be moved in relation to the sensor 14 as indicated by an arrow 15 by a transport 17 comprising any of a variety of well known mechanisms. The document D is also moved in relation to a magnetic read head 16 which senses the magnetic stripe 10. The two streams of data, from the magnetic stripe 10 and the area 12, are processed in accordance herewith to manifest the authenticity of the document D. Prior to a detailed consideration of the processing system of FIGURE 1, some explanation is appropriate with respect to the philosophy of operation in accordance herewith. Accordingly, reference will now be made to the graphic representations of FIGURE 2.

Consider a pair of curves 18 and 20 depicting analog representations that are to be correlated. For purposes of illustration, assume the curves 18 and 20 manifest analog signals from the document D. Specifically, assume the curve 18 is a reference signal as might be taken from the magnetic stripe 10 (FIGURE 1) while the curve 20 is a characteristic observation as may be sensed freshly from the area 12 by the sensor 14. Thus, while the curves 18 and 20 are from a similar source, i.e. the area 12 (FIGURE 1) they were sensed and processed at different times with the consequence that the document D likely has changed to some extent during the interim. The general philosophy of the system of the present invention involves dissecting the curves 18 and 20 to perform a plurality of correlations utilizing offset, overlapping fragments of the curves 18 and 20.

In accordance with convention, the curves 18 and 20 are plots of signal amplitude (e.g. translucency) on a time base. Accordingly, a line L1 defines a specific fragment of the curves 18 and 20. Similarly, the lines L2 through L8 each designates other specific fragments of the curves 18 and 20 by defining a precise length of time on the common base of the curves 18 and 20. Note that the lines L1 through L8 indicate respectively offset, overlapping fragments of the curves 18 and 20. That is, the line L2 designates time or space fragments in each of the curves 18 and 20 (abscissa) offset from the fragments designated by the line L1; however, the two lines L1 and L2 designate overlapping curve segments with common portions.

The leading edge of each line L1 through L8 is offset from the leading edge of the prior line by a distance M and the lines L1 through L8 are all of uniform length N. In accordance with convention, these distances are manifestations of time and space with respect to the analogs represented by the curves 18 and 20.

In accordance with the present invention, as illustrated in FIGURE 2, comparison of the curves 18 and 20 is accomplished by eight separate correlations of offset, overlapping curve fragments. Specifically, the fragments of the curves 18 and 20 designated by the line L1 are correlated to provide a first correlation score C1 as indicated. Similarly, the fragments of the curves 18 and 20 designated by the line L2 are correlated to provide a second correlation score C2. Thus, correlations of the curve fragments designated by each of the line segments L1 through L8 each produces an individual correlation score C1 through C8.

Some interesting phenomena may now be observed. Each time represented along the curves 18 and 20 is treated in three distinct and adjacent correlations. An example will be helpful. Assume that an ink blot has been deposited on a document D as manifest by an excursion 24 in the curve 20. That is, assume the presence of a black sub-area on the document D which is substantially opaque and accordingly produces the negative-going excursion 24. The radical departure of the excursion 24 from the record curve 18 will be reflected negatively in the correlation. However, in accordance with the defined fragmentations for correlation and as illustrated, the excursion 24 will impact negatively only on the scores C4, C5 and C6 as indicated graphically in FIGURE 2 by the arrow 29. Thus, an adjacent set of three correlation scores in the example of FIGURE 2 suggests a single defect in the document as an ink blot, a tear or similar damage.

Recapitulating, note that each of the correlation scores C1-C8 involves predetermined data curve fragments as indicated by the lines L1 through L8. In that regard, note that the curves 18 and 20 are processed as closed loops with the consequence that the lines L7 and L8 specify end fragments of the curves 18 and 20. The closed-loop treatment of the curves 18 and 20 is indicated by dashed-line loops 26 and 28.

The dissection of comparison data into offset, overlapping fragments (lines L1-L8) provides informative correlation scores as suggested above. The information may be substantially enhanced by a judicious choice of the offset and the length of the fragments. That is, careful selection of the distance M (FIGURE 2) and the length N enhances the analysis. For example, the space or time manifest by the distance M might be related to the size of a likely sub-area of damage on a document. For example, the width of a pencil mark might be considered. The space or time manifest by the length N might then be selected to provide significant character and statistical analysis. Accordingly, logical predictions can be made based on the correlation scores.

The representation and description of FIGURE 2 as set forth above presumed a pair of analog signals manifest by the curves 18 and 20. In the disclosed structural embodiment, representations of the two analogs are digitized. Generally in that regard, the data of the curve 18 is sampled and digitized for recording on the magnetic stripe 10 (FIGURE 1). At the time of authentication, the data of the curve 20 (from the sensor 14, FIGURE 1) will be sampled and digitized preparatory to correlation. In such a format of dissection, the lines L1 through L8 may be specified in terms of a predetermined number of samples. For example, the curves 18 and 20 might be dissected by twenty-five samples and the lines L1 through L8 each might be of ten samples in length and offset by the space or time of three samples. Of course, such figures are merely illustrative of the values M and N and a wide variety of practical possibilities exist.

In view of the above analysis, the system of FIGURE 1 can now be more readily understood. Accordingly, the remainder of the system will now be described.

The magnetic read head 16 for the stripe 10 of the document D is connected to a reference signal processor 34 to provide well defined digital signals utilizing techniques and apparatus as well known in the prior art. Note that the magnetic stripe 10 may include a variety of data relating to the document D or its authentication; however, as related to the illustrative embodiment, the significant information comprises digital data representing the characteristic of the area 12 as sensed by a unit similar to the sensor 14.

The sensor 14 provides an analog signal to a test signal processor 36 which amplifies, samples and digitizes the test data. Details of apparatus for use as the processor 36 are disclosed in the above-referenced U. S. Patent 4,423,415. Accordingly, the test signal processor supplies a series of digital signal representations to a preliminary test unit 38. The signals represent a series of digitized samples or measurements ordered in time sequence and taken from the analog characteristic as represented by the curve 20 in FIGURE 2. Accordingly, the sequence of digital representations indicate the sequence of translucency values sensed by the sensor 14 (FIGURE 1) in scanning across the area 12.

The preliminary test unit 38 imposes preliminary requirements on the observed values as conditions to proceed with the authentication test. Specifically, the preliminary test unit 38 may observe the average value of translucency sensed in the area 12. If for example the original material of the document D is replaced with a photographic representation, the average level of translucency may indicate such a fact. Accordingly, the unit 38 supplies a reject signal through a conductor 40 to actuate a display 42 rejecting the document D. As another possibility, the unit 38 might work in the combination on maximum peak values, minimums or averages to impose various criteria. A spurious black spot or other defect could be discounted by such techniques, as could other acquired marks.

The preliminary test unit 38 might perform various other tests to indicate that the area 12 of the document D has or has not been modified. The range of extreme signal values may be informative as well as the degree of change between adjacent signal values. Of course, the individual tests employed by the unit 38 will depend to some extent on the material of the document D and the nature of the sensor 14.

In addition to performing preliminary tests, the unit 38 also supplies the series of digital signals to a test signal assembler 44 structurally similar to the reference signal assembler 46 (upper right). As described in greater detail, these units formulate the received series of digital values into offset, overlapping groups. That is, the individual digital values are patterned as illustrated in FIGURE 2 so that a series of offset, overlapping fragments of the area 12 are represented for individual correlations. Additionally, the assemblers 44 and 46 perform certain arithmetic manipulations for correlation as disclosed in greater detail below. At this point it becomes important to understand that the assemblers 44 and 46 supply sequences of signals representative of groups of measurements or samples each of which accounts for an offset, overlapping section of the area 12 and which are supplied to an arithmetic unit 50 for correlation.

Correlation is performed by the arithmetic unit 50 to accomplish a series of score signals representative of the correlations between pairs of groups, i.e. pairs including a set of reference signals and a set of test signals. The correlation scores are manifest by score signals to a register 52 which is in turn connected by a cable 54 to a logic analyzer 56. Signals manifesting the analysis performed by the analyzer 56 are supplied to the display 42 to indicate the conclusions from such analysis. Normally, the possible indications will be: document authentic, document not authentic, document likely authentic but dirty or determination of authenticity not possible.

In view of the above descriptions, it will now be helpful to consider the manner in which the document D is produced using certain elements as appear in the system of FIGURE 1. As indicated above, raw cards (printed and bearing the magstripe 10) are pre-processed by sensing the area 12, forming representative digital signals and recording such signals on the magstripe 10. To accomplish such a record, a sensor (as the sensor 14) may be employed along with a processor (similar to the test signal processor 36). A magnetic recording head (not shown) receives and records signals from the processor. In that regard, the operation of the processor 36 will now be considered in greater detail.

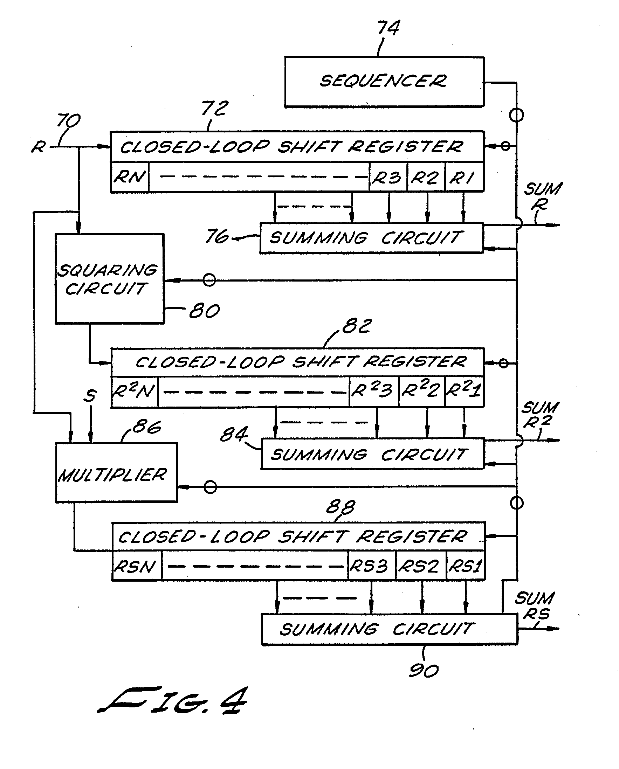

Referring to FIGURE 3, a fragment of the curve 20 is illustrated. That is, the curve 20 is the analog provided from the sensor 14 for the area 12. The fragment of curve 20 shown in FIGURE 3 is represented on a grid wherein the abscissa designates individual times of sampling and the ordinate represents a digitizing scale.

Using well known apparatus of the prior art, the signal represented by the curve 20 (FIGURE 3) is sampled at discrete intervals as indicated by the lines 60. That is, in time sequence, the signal is sampled and stored as a predetermined amplitude. Such an amplitude is then digitized as indicated by the vertical scale. Considering a specific operation, the initial fragment of the signal represented by the curve 20 is sampled at a time indicated by the numeral "one". The amplitude of the sample is then scaled and rounded to provide a digital value of "one" for the sample.

Accordingly, the test signal processor 36 (FIGURE 1) provides a stream of digital signals representing the amplitudes of the analog signal of curve 20. That stream of digital data is recorded on the magstripe 10 for subsequent use as the reference in comparison with freshly sensed data from the area 12. Note that during the comparison the freshly sensed data is processed by the processor 36 just as described above with respect to FIGURE 3 to provide a stream of digital values.

The two streams of digital values (from processors 34 and 36) may be variously correlated; however, preliminarily in accordance herewith the signals are organized or defined into offset, overlapping test groups as explained above. Furthermore, in the disclosed embodiment, the correlation utilizes certain product values. Specifically in that regard, correlation in the arithmetic unit 50 may be performed in accordance with various correlation formulas. For example, the book Statistics A New Approach, by the Free Press, New York (1956), at page 544, states a formula for the correlation coefficient as:

$$C = \frac{\text{Summation of } S \cdot R}{\sqrt{(\text{Sum } S^2)(\text{Sum } R^2)}}$$

Other formulas are well known, usually involving the quantities: summations of S and R, summations of products of S and R and summations of the squares of S and R.

Recapitulating to some extent, from the above expression it may be seen that certain values must be formed for a correlation computation. Other equations for the computation involve summations of S and R. For example,

$$C1 = \frac{\text{Sum } S \cdot R - (\text{Sum } S)(\text{Sum } R)}{\sqrt{(\text{Sum } S^2 - (\text{Sum } S)^2)(\text{Sum } R^2 - (\text{Sum } R)^2)}}$$

To accommodate various computations based on correlation coefficient formulas, discrete signal values might be processed to provide: sum(R), sum(R²), sum(RS), sum(S²) and sum(S). These operations are accomplished by the signal assemblers 46 and 44 which may take somewhat similar forms. A disclosed illustrative embodiment of the reference signal assembler 46 is shown in detail in FIGURE 4 and will now be considered. Note each assembler receives representative signals for S and R.

Signal representations are supplied at an input line 70 (FIGURE 4, upper left) as a stream of digital values. Specifically, a digital value R1 is the initial digital value in the sequence of reference data. The second digital value is designated R2 and subsequent digital values are similarly designated through RN.

The stream of digital values (manifest generically by the signal R) are received through the line 70 by a closed-loop, shift register 72. Control and sequencing of the register 72 is provided by a sequencer 74 as well known in the prior art.

The discrete digital values R1 through RN are contained in the register 72 for sequential shifting with respect to a summing circuit 76. That is, several stages of the register 72 are connected to the summing circuit 76 to define a group of values. Under control of the sequencer 74, the summing circuit 76 periodically provides a signal representative of the value sum(R).

The generation of signals representative of sum(R²) and sum(RS) involve similar structure. Specifically, from the input line 70, signals R are applied to a squaring circuit 80 the output of which is supplied to a closed-loop, shift register 82. A portion of the stages in the register 82 (defining a group) are supplied to a summing circuit 84. As disclosed in detail below, the summing circuit 84 provides output signals indicative of sum(R²).

The line 70 is also connected to a multiplier 86 along with signals S (S1 through SN). Accordingly, the multiplier provides product signals RS to a closed-loop, shift register 88. Again as with the other quantities, a portion of the stages in the register 88 are connected to a summing circuit 90 having an output which is a representation of sum(RS).

Note that the structure of FIGURE 4 is representative of the reference signal assembler 46 (FIGURE 1). The test signal assembler 44 (FIGURE 1) is similar; however, the shift register 88 and circuit 90 are deleted along with the multiplier 86 since the quantity sum(RS) is common and need not be duplicated. Accordingly, the assemblers provide values of sum(R), sum(R$^2$), sum(RS), sum(S$^2$) and sum(S) for each group of offset signal values.

The operation of the authentication system will now be considered in detail. Accordingly, assume the presentation of a document D (FIGURE 1) for authentication. Further, assume the document D comprises a sheet of paper with a varying opacity characteristic that has been measured in the area 12. Also as explained above, assume that the varying opacity characteristic has been reduced to digital representations as described by sampling and digitizing the analog. Finally, as indicated above, the magstripe 10 may include other data relating to the document D, characteristic location data and the selected specific data from the area 12.

To authenticate the document D, it is driven under the sensor 14 and the head 16 to facilitate dynamic reading. The digital data from the magstripe 10 is provided from the head 16 to the processor 34 for refinement then for organization by the assembler 46 utilizing the techniques described with respect to FIGURE 2 in the apparatus of FIGURE 4. Specifically, each of the characteristic digital values R1 through RN is developed and placed in the register 72 (FIGURE 4). Concurrently, each of the values R1 through RN is squared in the circuit 80 to provide signal representations R$^2$1 through R$^2$N which are registered in the register 82. At the same time, in the multiplier 86, the individual signals R1 through RN and S1 through SN are multiplied as sets (e.g. R1•S1, R2•S2, etc.) to provide signals RS1 through RSN which are set in the register 88.

Under control of the sequencer 74, developed signals circulate in each of the registers 72, 82 and 88. Consequently, at specific times offset, overlapping groups of signals are supplied from select stages in each of the registers 72, 82 and 88 to the associated summing circuits 76, 84 and 90 respectively. At an initial time, an initial group of signals, e.g. R1 through R10, is summed by the summing circuit 76 to provide an output signal sum(R). Coincidentally, the same order of stages, for example signals R$^2$1 through R$^2$10 are summed by the circuit 84 to provide an output signal sum(R$^2$). Also for example, the signals RS1 through RS10 are summed by the summing circuit 90 to provide a signal sum(RS). Thus, sets of signals are provided in the sum format for the initial correlation.

After provision of the initial sum signals, the contents of the registers 72, 82 and 88 are shifted by the sequencer 74, for example by an offset M of three stages (see FIGURE 2). Thereafter, select stages of the values are again summed. Pursuing a specific example, the summed second group might include stages R4 through R14. Concurrently, the signals R$^2$4 through R$^2$14 and RS4 through RS14 would also be summed. Consequently, a second set of sum signals would be supplied representative of a second group of offset, overlapping values for a second correlation.

The cycle is repeated until signals have been provided for each of the offset, overlapping groups as explained with respect to FIGURE 2. Thus, for each group a set of sum signals, i.e. sum(R), sum(R$^2$) and sum(RS) is provided from the assembler 46 (FIGURE 1) to the arithmetic unit 50. Concurrently, the test signals S sensed by the sensor 14 (FIGURE 1) are processed and similarly supplied to the arithmetic unit 50. Consider that operation in some greater detail. Note that small correlations might be performed along with a variety of other test criteria for specific applications.

The test signals S from the sensor 14 are refined by the processor 36 and subjected to certain preliminary tests in the unit 38. Of course, it is possible that the document D would be rejected on the basis of such preliminary tests in which event a signal from the unit 38 would be supplied to the display 42 aborting further operation of the system and indicating a rejection. With clearance of the preliminary tests, the digital representations of the sensed or test values S1 through SN are organized by the assembler 44 just as explained with respect to the reference signals R1 through RN and the assembler 46 as treated with reference to FIGURE 4. Accordingly, values of test signals S and reference signals R in the form of sums for each group are supplied to the arithmetic unit 50.

Receiving the signals sum(S), sum(S$^2$), sum(RS), sum(R) and sum(R$^2$), the arithmetic unit 50 (FIGURE 1) performs individual correlations on the individual sets of signals as explained with reference to FIGURE 2 to accomplish correlation coefficient scores. Illustrative correlation formulas for the disclosed embodiment are set forth above and in that regard, the arithmetic unit 50 simply performs the requisite computations to provide score values to the register 52. Note that various arithmetic units might be used, including a microcomputer. In that regard, the correlation coefficient score might be scaled to have values between -10,000 and +10,000. Accordingly, the values may be interpreted as follows:

| Value | Indication |
|---|---|
| +10,000 | A perfect match of the two correlated arrays |
| 0-10,000 | The degree of similarity between the two arrays |
| 0 | The arrays are completely uncorrelated |
| 0-(-10,000) | A measure of the mirror image similarity of the arrays (difference) |
| -10,000 | The two arrays are exact opposites |

Signals representative of the scores C are supplied from the register 52 to the analyzer 56 wherein various logic operations may be performed to determine a result. Of course, any major array of scores C approaching 10,000 is detected by the analyzer 56 to actuate the display 42 and manifest the authenticity of the document D. Also, a strong majority of high scores would normally prompt an authentication. In that regard, the proximity of the offset test groups in relation to scores is significant as discussed with respect to FIGURE 2. In the example of FIGURE 2, a defect as represented by the excursion 24 is manifest in three adjacent offset groups. Accordingly, the analyzer 56 may well recognize diminished values of correlation for three adjacent scores to manifest a scar, mark, hole or other damage to the anticounterfeit area 12 of the document D. Other possibilities also exist as a result of the offset, overlapping test groups. For example, analysis of the correlation scores may suggest layering or repeating analysis with fresh correlations and with the elimination of certain signals to eliminate a defined sub-area in the area 12 from comparison. The logic of the analyzer may also modify the parameters M and N (FIGURE 2) as a basis for greater selectivity in performing a correlation.

Of course, the sophistication and complexity provided by the analyzer 56 may vary widely depending on specific applications and documents D. However, a significant consideration with respect to the present development involves recognizing the ability to perform logic analysis which stems from the plurality of correlation scores based on offset, overlapping test groups of data. Various forms of averaging might also be employed. That aspect in combination with other aspects of the system as illustratively disclosed may be variously implemented and practiced to accomplish beneficial results attendant the present invention. Accordingly, the scope hereof should be defined in accordance with practical considerations and the claims as set forth below.

## Claims

1. A method of authentication of a document or other item (D), in which a sequence of representations (20;S) freshly derived from sensing the item (D) is compared with a sequence of reference representations (18;R) registered in respect of such item, characterised in that successive, overlapping parts (L) of the sequence of freshly-derived representations (20;S) are correlated respectively with successive, overlapping parts (L) of the sequence of reference representations (18;R), that values (C) for the extents of correlation between the said parts correlated, are derived, and that authentication of said item (D) is provided in dependence upon the derived correlation values (C).

2. A method according to Claim 1 characterised in that the parts (L) of the sequences of freshly-derived and reference representations (20,18;S,R) used in the correlation operation are all substantially of the same length (N) as one another, and that the extent (M) of overlap between them is the same substantially throughout both sequences (20,18;S,R).

3. A method according to Claim 1 or Claim 2 characterised in that the extent (M) of overlap between successive parts (L) of each sequence of representations (20,18;S,R) used in the correlation operation, is such that substantially all individual representations (S1-SN,R1-RN) occur in three such successive parts (L) of the respective sequence.

4. A method according to any one of Claims 1 to 3 characterised in that both sequences (20,18;S,R) are of digital data.

5. A method according to any one of Claims 1 to 4 characterised in that the sequence of reference representations (18;R) is read from a record (10) of that sequence borne by the said document or other item (D) itself.

6. A method according to any one of Claims 1 to 5 characterised in that the sequence of freshly-derived representations (20;S) is submitted to an authentication test (38) separately from, and additional to, the correlation operation.

7. A method according to any one of Claims 1 to 6 characterised in that the correlation values are computed as multi-valued scores (C), and that an output indication (42) of authenticity is derived by analysis (56) of these scores.

8. A system for authentication of a document or other item (D), in which a sequence of representations (20;S) freshly derived from sensing the item (D) is compared with a sequence of reference representations (18;R) registered in respect of such item, and an output (42) related to authenticity of said item (D) is provided in dependence upon the result of the comparison, characterised in that the system includes means (44,46,50) for correlating successive, overlapping parts (L) of the sequence of freshly-derived representations (20;S) respectively with successive, overlapping parts (L) of the sequence of reference representations (18;R) to derive values (C) for the extents of correlation between them, and that the said output (42) is provided in dependence upon the correlation values (C).

9. A system according to Claim 8 characterised in that the parts (L) of the freshly-derived and reference representations (20,18;S,R) used in the correlation operation are all substantially of the same length (N) as one another, and that the extent (M) of overlap between them is the same substantially throughout both sequences.

10. A system according to Claim 8 or Claim 9 characterised in that the extent (M) of overlap between successive parts (L) of each sequence of representations (20,18;S,R) used in the correlation operation, is such that substantially all individual representations (S1-SN,R1-RN) occur in three such successive parts (L) of the respective sequence.

11. A system according to any one of Claims 8 to 10 characterised in that both sequences (S,R) are of digital data.

12. A system according to any one of Claims 8 to 11 characterised in that the system includes means (44,46) for deriving from the sequences of freshly-derived and reference representations (20,18;S,R) a plurality of signals in accordance with respective arithmetical functions (SUM R,SUM $R^2$,SUM RS) of the said representations of the two sequences (20,18;S,R), each such function being a function of the representation-magnitudes within the successive parts (L) of one or both of the said sequences (20,18;S,R), and arithmetic means (50) responsive to these signals to compute the said correlation values as multi-valued scores (C).

13. A system according to Claim 12 characterised in that the system includes means (56) for processing the correlation scores (C) to provide said output as representative of degree of authenticity (42).

14. A system according to any one of Claims 8 to 13 characterised in that the system also includes means (38) for analyzing the representation-magnitudes of the freshly-derived sequence (20,S) as an additional test of authenticity.

0268450

FIG.1

REFERENCE SIGNAL PROCESSOR — 34

REFERENCE SIGNAL ASSEMBLER — 46

TEST SIGNAL PROCESSOR — 36

PRELIMINARY TEST UNIT — 38

10 12 14 15 16 D

DOCUMENT TRANSPORT — 17

TEST SIGNAL ASSEMBLER — 44

ARITHMETIC UNIT — 50

SCORE REGISTER — 52

54

SCORE LOGIC ANALYZER — 56

DISPLAY — 42

FIG.3

20

60

123

0268450

SAMPLE LOCATIONS

26

18

RECORD

28

20

TEST

24

CORRELATION
SCORES

L1

C1

L2

C2

L3

C3

L4

C4

29

L5

C5

L6

C6

L7

C7

M

L8

C8

N

FIG. 2

0268450

FIG. 4